# EUROPÄISCHE PATENTSCHRIFT

(11) **EP 1 226 046 B1**
(45) Veröffentlichungstag und Bekanntmachung des Hinweises auf die Patenterteilung: **22.03.2006**
(21) Anmeldenummer: 00982983.9
(22) Anmeldetag: 10.10.2000
(51) Int. Cl.: B60K 35/00

(54) **VERFAHREN UND VORRICHTUNG ZUR ANZEIGE EINES MESSWERTES IN EINEM FAHRZEUG**
METHOD AND DEVICE FOR DISPLAYING A MEASURED VALUE IN A VEHICLE
PROCEDE ET DISPOSITIF POUR L'AFFICHAGE D'UNE VALEUR DE MESURE DANS UN VEHICULE

(30) Priorität: 19.10.1999 DE 19950155
(43) Veröffentlichungstag der Anmeldung: 31.07.2002
(73) Patentinhaber: ROBERT BOSCH GMBH, 70442 Stuttgart (DE)
(72) Erfinder: HAULER, Peter, 76275 Ettlingen (DE); WALTHER, Michael, 71696 Möglingen (DE)
(86) Internationale Anmeldenummer: PCT/DE2000/003544
(87) Internationale Veröffentlichungsnummer: WO 2001/028803

(56) Entgegenhaltungen:
- DE-A- 3 834 229
- DE-A- 4 031 870
- DE-A- 4 414 657
- DE-A- 19 500 668
- DE-A- 19 615 249
- DE-A- 19 755 470
- DE-U- 29 610 677
- FR-A- 2 729 345

## Beschreibung

### Stand der Technik

Die Erfindung geht aus von einem Verfahren zur Anzeige eines Meßwertes nach der Gattung des Hauptanspruchs. Es sind Kombiinstrumente in einem Kraftfahrzeug zum Beispiel aus der Druckschrift "Das Porsche Informations- und Diagnosesystem" aus VDI-Berichte Nr. 687, 1988, bekannt, bei denen eine Vielzahl von Anzeigeinstrumenten in einer Einheit kombiniert angeordnet sind. Zusätzlich sind Anzeigen vorgesehen, die einen Fahrer auf mögliche Fehlfunktionen des Fahrzeugs hinweisen, wie zum Beispiel auf eine zu hohe Kühlwassertemperatur. Weiterhin gibt es sogenannte frei programmierbare Kombiinstrumente, bei denen in einer großen, vorzugsweise vor dem Fahrer angeordneten Bildschirm- oder Projektionsanzeige alle Meßgrößen und Warnfelder angezeigt werden. Eine derartige Bildschirmanzeige ist zum Beispiel aus dem Artikel "Stern der Zukunft" aus der Zeitschrift MOT-Technik, Mai 1991, Seite 94 bekannt. Bis auf eine situationsabhängige Ausgabe von Warnungen, wie sie auch bei bisherigen Kombiinstrumenten bereits bekannt ist, beschränkt sich dabei die Anzeige in diesem frei programmierbaren Kombiinstrument auf eine situationsunabhängige Darstellung von Meßgrößen.

Aus der FR 2 729 345 A1 ist eine Anzeigevorrichtung für Fahrzeuge, gemäss dem Oberbegriff des Anspruchs 1 bgw. 11, bekannt, bei der neben einer Flüssigkristallanzeige ein mechanischer Zeiger angeordnet ist, um eine Geschwindigkeit auf verschiedenen Skalen in der Flüssigkristallanzeige anzuzeigen. Die gewählte Skala kann z.B. davon abhängen, ob sich das Fahrzeug innerhalb der Stadt oder auf der Landstraße bewegt. In einer weiteren Ausführungsform kann eine Geschwindigkeit als Zahlenwert in def Anzeige dargestellt werden.

Aus der DE 196 15 249 A1 ist eine Geschwindigkeitsanzeige für ein Kraftfahrzeug bekannt, welche die Differenz zwischen einem Istwert und einem Sollwert der Geschwindigkeit anzeigt. Der Sollwert entspricht beispielsweise einer vorgeschriebenen Höchstgeschwindigkeit des Kraftfahrzeugs und wird drahtlos zu dem Kraftfahrzeug übertragen. Weiterhin ist ein Signalgeber vorgesehen, welcher bei einer Überschreitung der Geschwindigkeit ein optisches oder akustisches Signal erzeugt.

Aus der DE 197 55 470 A1 ist ein Anzeigesystem für Fahrzeuge bekannt, das einen Bildschirm und einen bildgenerierenden Rechner enthält. Das Anzeigesystem ist ferner mit informationsgebenden Elementen des Fahrzeugs derart verbunden, dass Informationen mit Hilfe von mindestens einem Zeiger und mindestens einer Skala auf einem Bildschirm dargestellt werden können. An der Skala sind zusätzliche Markierungen zur Darstellung von Zusatzinformationen angezeigt.

### Vorteile der Erfindung

Das erfindungsgemäße Verfahren mit den Merkmalen des Hauptanspruchs hat demgegenüber den Vorteil, daß eine Anzeige von Meßwerten situationsabhängig erfolgt, indem der dargestellte Anzeigebereich der Meßgröße an die Verkehrssituation angepaßt wird. Dies erfolgt dadurch, daß ein maximaler Skalenwert aus mindestens einem weiteren Wert wie z.B. aus den Fahr- und Betriebsdaten des Fahrzeugs und/oder aus externen bzw. zusätzlichen Verkehrsinformationen ermittelt wird. Während bei einer situationsunabhängigen Anzeige einer Meßgröße stets ein unveränderlicher maximaler Skalenwert der Anzeige zugrunde gelegt werden muß, wobei sich der maximale Skalenwert bei einer Geschwindigkeitsanzeige z.B. an der Höchstgeschwindigkeit des Fahrzeugs orientiert, kann durch das erfindungsgemäße Verfahren der Anzeigebereich an die jeweilige Verkehrssituation und den Fahrzeugzustand angepaßt werden. Somit kann der Fahrer genauer über den jeweils aktuellen Meßwert informiert werden, wodurch auch kleinere Schwankungen des Meßwertes leichter erkennbar sind.

Weiterhin ist es vorteilhaft, wenn bei Fahr- und Betriebsdaten, die eine besondere Aufmerksamkeit und/oder ein Handeln des Fahrers erfordern, eine Anzeige der Skala in einer Warnfarbe erfolgt. Wechselt z.B. die Anzeige der Kühlwassertemperatur ihre Farbe in eine Warnfarbe infolge einer zu hohen Kühlwassertemperatur, wird ein Fahrer besonders darauf hingewiesen. Denn im allgemeinen wird die Kühlwassertemperatur nur in einem üblichen Rahmen liegen, so daß ein Fahrer eine Überschreitung eines zulässigen Wertes ohne einen zusätzlichen Hinweis möglicherweise nicht sofort wahrnimmt. Bezüglich der Geschwindigkeitsanzeige ist es zum Beispiel bei Fahrten im Nebel wichtig, daß ein Fahrer nicht schneller fährt, als die Sichtverhältnisse zulassen. Da Nebel jedoch andererseits eine Orientierung erschwert, ist ein Fahrer in diesem Fall besonders auf eine leicht erkennbare Geschwindigkeitsanzeige angewiesen, um seine Geschwindigkeit besser einschätzen zu können. Gleiches gilt z.B. für Fahrten in einem Tunnel oder in Baustellenbereichen. Durch die zusätzlich hervorgehobene Anzeige der Geschwindigkeitsskala in einer Warnfarbe wird ein Fahrer deutlicher auf seine aktuelle Geschwindigkeit hingewiesen.

Weiterhin ist es vorteilhaft, daß in einer Situation, die die besondere Aufmerksamkeit und/oder ein Handeln des Fahrers erfordert, die Anzeige der Meßwertskala vergrößert erfolgt, da auch hierduch eine bessere Ablesbarkeit gewährleistet wird. Der hierfür benötigte, zusätzliche Platz wird von der Anzeige jedoch nur solange eingenommen, wie die besondere Aufmerksamkeit des Fahrers erforderlich ist bzw. bis ein Handeln des Fahrers erfolgt ist. Hat der Fahrer z.B. einen Streckenabschnitt mit einer speziellen Geschwindigkeitsbegrenzung, wie z.B. eine Baustelle, verlassen oder hat der Fahrer bei einer zu geringen Tankfüllung getankt, kann wieder auf eine Standarddarstellung umgeschaltet werden.

Durch die in den Unteransprüchen aufgeführten Merkmale sind weitere vorteilhafte Weiterbildungen und Verbesserungen des im Hauptanspruch angegebenen Verfahrens möglich. Besonders vorteilhaft ist es, den Meßbereich auch bezüglich des Minimalwertes der Skala zu begrenzen. Dies ist insbesondere bei einer Kühlwassertemperaturanzeige von Vorteil. Während ein Fahrer zu Beginn der Fahrt daran interessiert ist, wie schnell die Temperatur im unteren Temperaturbereich ansteigt, um z.B. die Fahrzeugheizung einschalten zu können, wird die Temperatur nach einigen Kilometern Fahrt z.B. einen Wert von 70°C im allgemeinen nicht mehr unterschreiten. Ein Skalenbereich zwischen 0°C und 70°C kann folglich ausgeblendet werden, wodurch ein Bereich höherer Temperaturen mit einer größeren Genauigkeit angezeigt werden kann.

Es ist weiterhin vorteilhaft, daß der maximale Skalenwert so gewählt wird, daß ein maximal erlaubter Meßwert durch den maximalen Skalenwert um mindestens einen ersten Prozentwert und höchstens um einen zweiten Prozentwert überschritten wird, wobei der zweite Prozentwert größer als der erste Prozentwert gewählt wird. Hierdurch ist es möglich, daß geringe Überschreitungen eines maximal erlaubten Meßwertes immer noch in der Skala angezeigt werden. Somit werden z.B. geringfügige Überschreitungen einer erlaubten Geschwindigkeit bzw. geringfügige Überschreitungen der vom Hersteller gemessenen Höchstgeschwindigkeit eines Fahrzeugs noch in der Anzeige dargestellt.

Es ist weiterhin vorteilhaft, als Betriebsparameter zumindest die Meßgrößen Öldruck, Kühlwassertemperatur Generatorfunktion und Außentemperatur zu erfassen, denn alle diese Meßgrößen sind entweder für die Fahrsicherheit bzw. für ein Funktionieren des Motors wichtig. Neben der direkten Anzeige der Betriebsparameter in einer eigenen Anzeige können die Betriebsparameter dabei auch für die Berechnung eines maximalen bzw. minimalen Skalenwertes einer anderen Meßgröße verwendet werden. Insbesondere bei der Geschwindigkeitsskala ist eine Anpassung an die Betriebsparameter vorteilhaft. So sollte zum Beispiel bei einem Fahrzeugdefekt, wie einem zu geringen Öldruck oder einer zu hohen Kühlwassertemperatur, nicht zu schnell gefahren werden, um insbesondere Motorschäden zu vermeiden. Bei einer Außentemperatur im Gefrierpunktbereich, die über einen Temperatursensor ermittelt wird, kann durch Glatteis eine erhöhte Rutschgefahr für das Fahrzeug bestehen, so daß eine angepaßte Geschwindigkeit des Fahrzeugs angebracht ist. Ein Hinweis an den Fahrer kann dann, wie bereits oben erläutert, durch eine vergrößerte, farblich veränderte und/oder detailliertere Geschwindigkeitsanzeige erfolgen.

Ferner ist es bei der Fahrzeuggeschwindigkeit als Meßgröße vorteilhaft, daß über eine Fahrzeugortung zunächst eine Position des Fahrzeugs und aus dieser Position die Straßenklasse ermittelt wird, auf der sich das Fahrzeug momentan befindet. Der Anzeigebereich, also der minimale und der maximale Skalenwert der Geschwindigkeitsskala, kann auf diese Weise an die auf dieser Straßenklasse erlaubte Höchstgeschwindigkeit angepaßt werden. Hierbei ist es auch möglich, die Geschwindigkeitsskala an länderspezifische Höchstgeschwindigkeiten anzupassen.

Ferner ist es vorteilhaft, daß über eine Kamera Verkehrszeichen erfaßt werden können und insbesondere bei Verkehrszeichen, die die erlaubte Höchstgeschwindigkeit vorschreiben, eine Anpassung der Geschwindigkeitsskala an die durch das Verkehrszeichen vorgegebene Höchstgeschwindigkeit erfolgt.

Weiterhin ist es vorteilhaft, daß über eine Funkverbindung zu einer Sendeeinheit, z.B. zu Funkbaken und/oder zu einer Dienstezentrale, zusätzliche Verkehrsinformationen übermittelt werden. Dadurch ist es möglich, die Geschwindigkeitsanzeige an aktuelle Verkehrsbedingungen anzupassen. Zum Beispiel kann über eine derartige Funkverbindung an ein Fahrzeug übermittelt werden, daß in Folge von Smog oder einer zu hohen Ozonkonzentration eine Geschwindigkeitsbeschränkung lokal besteht, wobei der Anzeigebereich der Geschwindigkeitsanzeige entsprechend angepaßt wird. Außerdem können über die Funkverbindung dem Fahrzeug lokale Geschwindigkeitsbegrenzungen z.B. in einem Tunnel oder in einem Baustellenbereich mitgeteilt werden und der Anzeigebereich entsprechend der Geschwindigkeitsbegrenzung modifiziert werden.

Weiterhin ist es vorteilhaft, wenn der Fahrer manuell eine Geschwindigkeitsbeschränkung eingeben kann, durch die der Anzeigebereich der Geschwindigkeitsanzeige beeinflußt wird. Dieses Vorgehen ist insbesondere bei Einschränkungen sinnvoll, die nur schwer oder gar nicht zu detektieren sind. Z.B. bei angelegten Schneeketten besteht im allgemeinen eine Höchstgeschwindigkeit von 50 km/h. Eine automatische Detektion der Schneketten an den Rädern ist allerdings aufwendig. Ebenso gilt bei Matsch- und Schneereifen (Winterreifen) zumeist eine Geschwindigkeitsbeschränkung, die möglicherweise die erlaubte Höchstgeschwindigkeit des Fahrzeugs herabsetzt. Durch eine manuelle Eingabe kann die Geschwindigkeitsanzeige auch an eine derartige Höchstgeschwindigkeit angepaßt werden.

Weiterhin ist es vorteilhaft, daß eine Anzeige des Kombiinstrument als eine Flüssigkristallanzeige oder als ein Head-up-Display ausgeführt ist. Beide Anzeigen benötigen in einem Kraftfahrzeug im Vergleich zu einer Kathodenstrahlröhrenanzeige weniger Platz und sind für einen Benutzer des Fahrzeugs gut ablesbar.

Weiterhin ist es vorteilhaft, daß die Recheneinheit mit einer Vorrichtung zur Audioausgabe verbunden ist, so daß der Fahrer bei ermitteltem Meßwerten der Fahr- und Betriebsdaten, die eine besondere Aufmerksamkeit und/oder ein Handeln seitens des Fahrers erfordern, neben der an die Situation angepaßten Anzeige eine zusätzliche akustische Warnung erhält.

### Zeichnungen

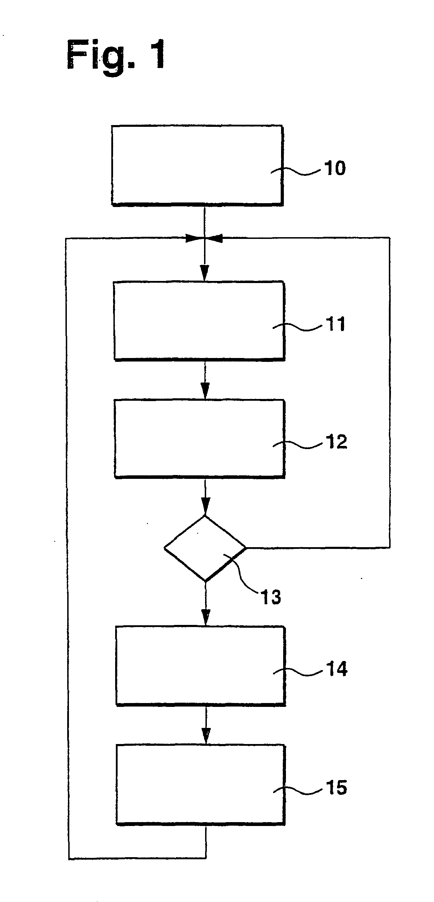

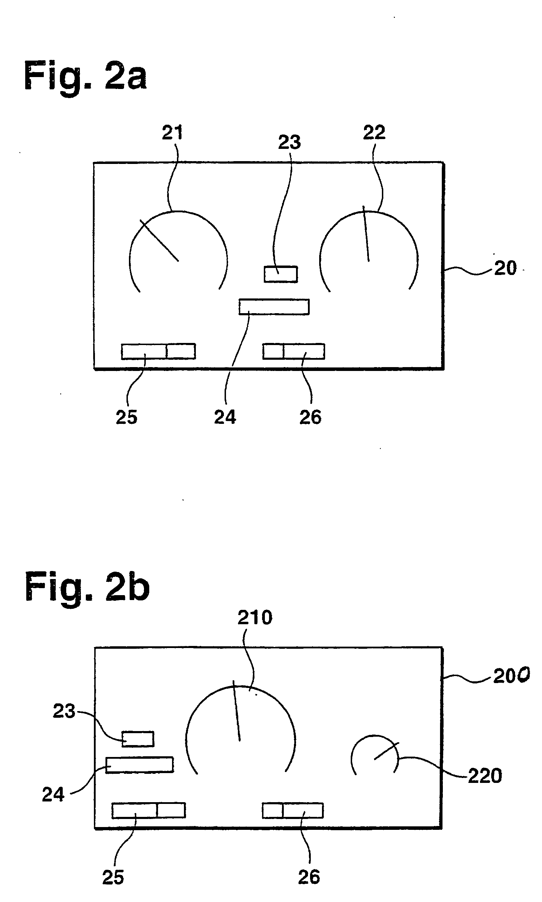

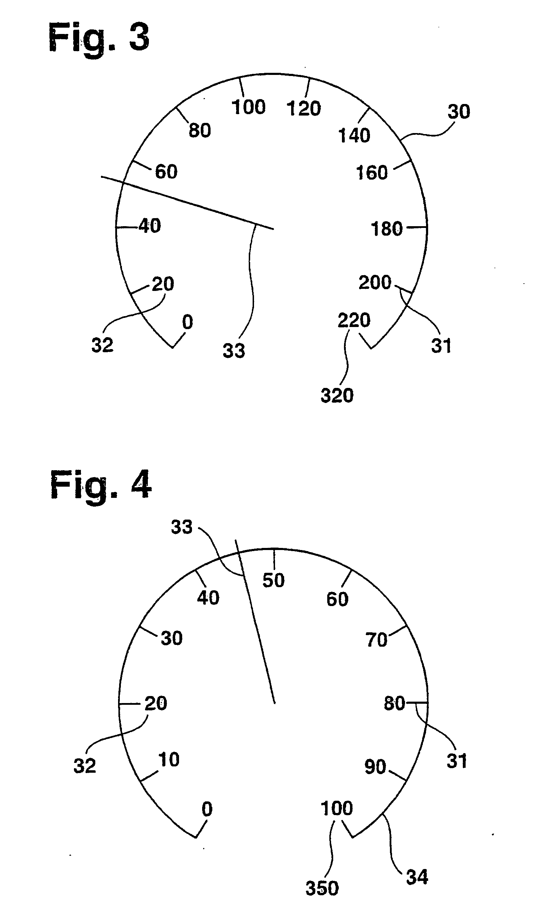

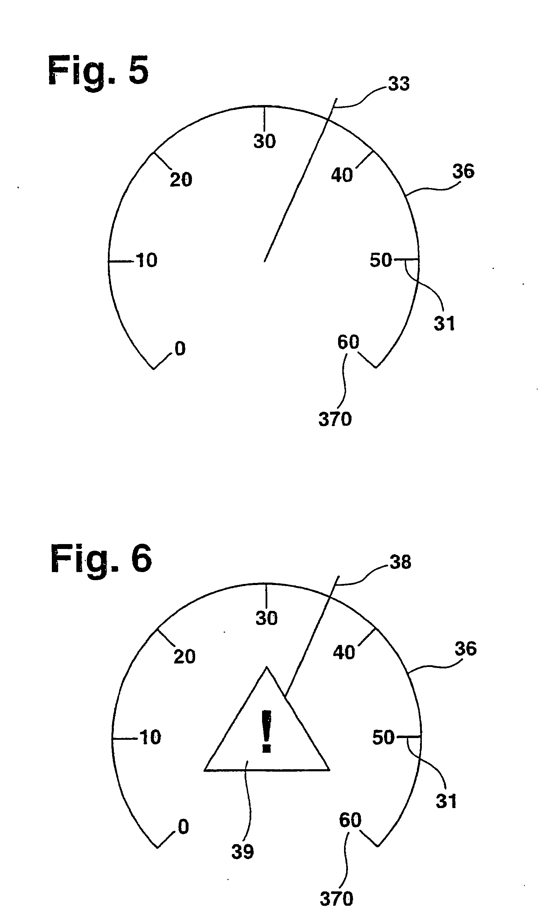

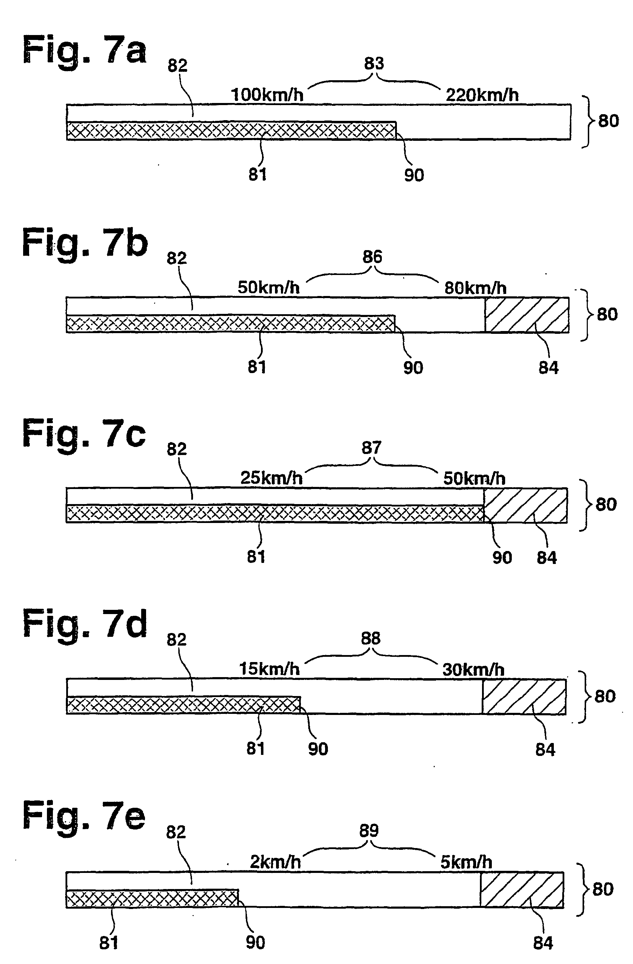

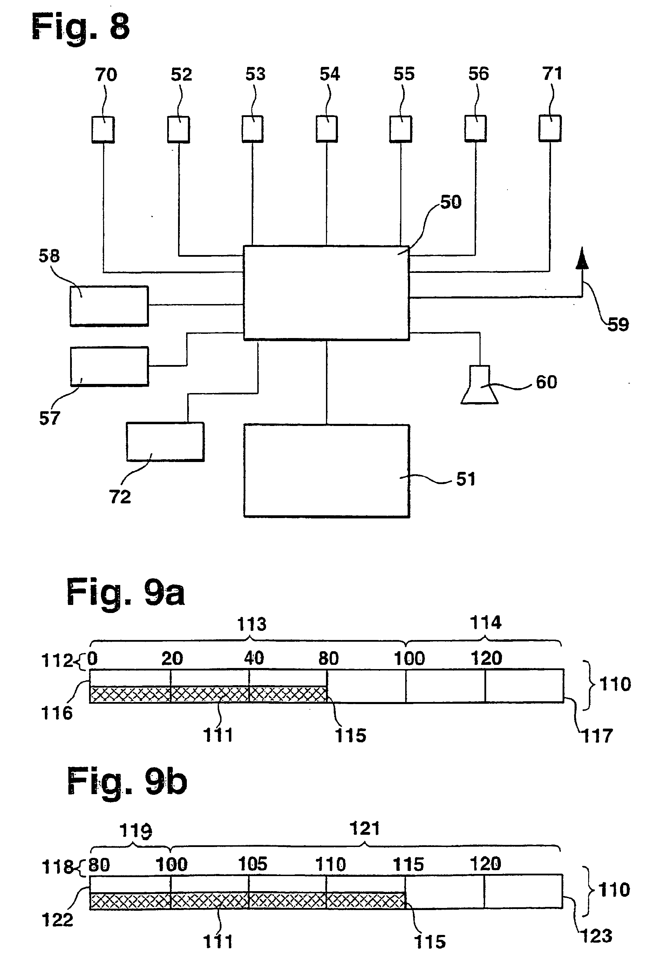

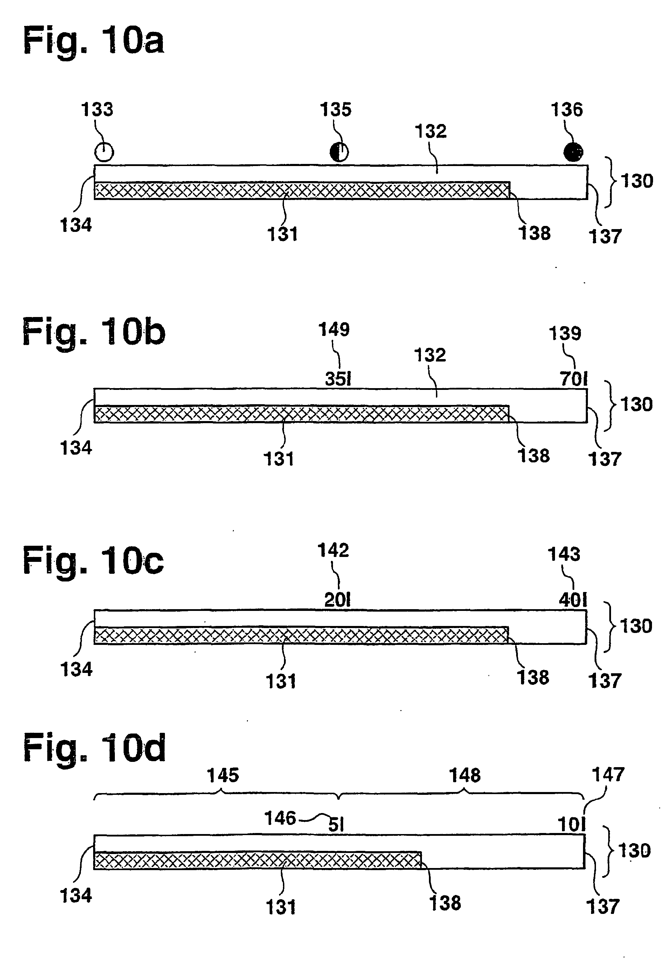

Ausführungsbeispiele der Erfindung sind in der Zeichnung dargestellt und in der nachfolgenden Beschreibung näher erläutert. Es zeigen Figur 1 ein erfindungsgemäßes Verfahren zur Anzeige eines Meßwertes am Beispiel einer Anzeige einer Fahrzeuggeschwindigkeit in einem frei programmierbaren Kombiinstrument, Figur 2a die Ausführung eines frei programmierbaren Kombiinstrumentes nach dem Stand der Technik, Figur 2b die vergrößerte Anzeige einer Geschwindigkeitsanzeige nach dem erfindungsgemäßen Verfahren als Rundinstrument bei einem frei programmierbaren Kombiinstrument, Figur 3 eine Geschwindigkeitsanzeige als Rundinstrument in einem frei programmierbaren Kombiinstrument, Figur 4 eine nach dem erfindungsgemäßen Verfahren gegenüber der Figur 3 geänderte Geschwindigkeitsanzeige, Figur 5 eine weitere Geschwindigkeitsanzeige als Rundinstrument in einem frei programmierbaren Kombiinstrument gemäß dem erfindungsgemäßen Verfahren, Figur 6 eine weitere Geschwindigkeitsanzeige mit einem zusätzlichen Warnsymbol, Figuren 7a-7e Ausführungen einer Geschwindigkeitsanzeige nach dem erfindungsgemäßen Verfahren als Balkenanzeige in einem frei programmierbaren Kombiinstrument, Figur 8 eine Vorrichtung zur Anzeige der Fahrzeuggeschwindigkeit in einem frei programmierbaren Kombiinstrument, Figur 9a und 9b eine erfindungsgemäße Anzeige der Kühlwassertemperatur, Figuren 10a-10d eine erfindungsgemäße Anzeige einer Tankanzeige.

### Beschreibung des Ausführungsbeispiels

Zunächst wird ein Ausführungsbeispiel eines erfindungsgemäßen Verfahrens und einer erfindungsgemäßen Vorrichtung zur Durchführung des Verfahrens anhand der aktuellen Fahrzeuggeschwindigkeit als darzustellender Meßwert ausgeführt.

In der Figur 1 ist ein erfindungsgemäßes Verfahren zur Anzeige einer Fahrzeuggeschwindigkeit dargestellt. Mit einem Initialisierungsschritt 10 wird eine Anzeige der Fahrzeuggeschwindigkeit initialisiert, zum Beispiel bei Starten des Motors. Standardbetriebsdaten für die Anzeige einer Geschwindigkeit, wie zum Beispiel ein maximaler und ein minimaler Skalenwert der Geschwindigkeitsanzeige, der von der Höchstgeschwindigkeit des Fahrzeugs abhängig ist, werden vorzugsweise aus einem nichtflüchtigen Speicher in einen Speicher einer Anzeigevorrichtung geladen. Vorzugsweise wird ein maximaler Skalenwert vorgesehen, der eine bauartbedingte Höchstgeschwindigkeit des Fahrzeugs um z.B. 40 km/h übersteigt. Als minimaler Skalenwert wird in dem gewählten Ausführungsbeispiel 0 km/h vorgesehen. Damit ist zunächst ein Anzeigebereich für die Anzeige der Geschwindigkeit festgelegt. Auf den Initialisierungsschritt 10 folgt ein Datenerfassungsschritt 11. In dem Datenerfassungsschritt 11 werden alle relevanten Daten für die Einstellung der Geschwindigkeitsanzeige ermittelt, insbesondere für den Anzeigebereich. Hierzu wird über eine in dem Fahrzeug vorhandene Navigationsvorrichtung eine Position des Fahrzeugs bestimmt. Aus der Position des Fahrzeugs wird die Straßenklasse ermittelt, auf der sich das Fahrzeug befindet, und aus der Straßenklasse wird in Abhängigkeit von einer gespeicherten Höchstgeschwindigkeit eine erlaubte Maximalgeschwindigkeit ermittelt. Weiterhin erfolgt über eine an dem Fahrzeug angebrachte Kamera eine Überprüfung, ob seit dem letzten Durchlaufen des Datenerfassungsschrittes 11 von der Kamera ein Verkehrszeichen erfaßt wurde, das eine erlaubte Höchstgeschwindigkeit vorgibt. Außerdem werden die Fahr- und Betriebsdaten des Fahrzeugs, so zum Beispiel Öldruck, Kühlwassertemperatur, Zustand einer Anhängerkupplung und/oder Einschaltzustand einer Nebelleuchte erfaßt. Bei einem zu geringen Öldruck oder einer zu hohen Kühlwassertemperatur sollte nicht zu schnell gefahren werden. Der Fahrzeughersteller muß hier einen Wert vorgeben, z.B. 60 km/h. Bei einer Fahrt mit Anhänger bestehen von der Straßenklasse abhängige Geschwindigkeitsbeschränkungen, z.B. 80 km/h auf Autobahnen in Deutschland. Die Nebelschlußleuchte darf nur bei einer Sichtweite von unter 50 m aktiviert werden, so daß nicht schneller als 50 km/h gefahren werden sollte. Über eine Funkverbindung zu Funkbaken und/oder zu einer Dienstezentrale werden Geschwindigkeitsbegrenzungen abgefragt, die zeitlich, z.B. durch Smog oder Beschränkungen in Abhängigkeit von der Verkehrsdichte, oder lokal, z.B. Baustelle oder Tunnel, bestehen.

In einem anschließenden Berechnungsschritt 12 wird aus den durch die in dem Datenerfassungsschritt 11 erfaßten Daten ein maximaler Skalenwert der Geschwindigkeitsanzeige ermittelt. Dies geschieht dadurch, daß aus den in dem Datenerfassungsschritt 11 ermittelten Daten bzw. Geschwindigkeitsbeschränkungen jeweils eine zulässige Höchstgeschwindigkeit des Fahrzeugs ermittelt wird. Hierbei wird aus den ermittelten Höchstgeschwindigkeiten die niedrigste, erlaubte bzw. mögliche Geschwindigkeit als Höchstgeschwindigkeit gewählt. Fährt ein Fahrzeug z.B. störungsfrei auf einer Landstraße(Höchstgeschwindigkeit 100 km/h), verfügt es über eine bauartbeingte Höchstgeschwindigkeit von 180 km/h und wird dabei jedoch ein Verkehrsschild mit einer Beschränkung auf 50 km/h detektiert, so wird 50 km/h als zulässige Höchstgeschwindigkeit ermittelt. Um den maximalen Skalenwert zu erhalten, wird die auf diese Weise ermittelte, zulässige Höchstgeschwindigkeit um einen ersten Prozentsatz erhöht, so daß auch geringe Überschreitungen der zulässigen Höchstgeschwindigkeit in der Geschwindigkeitsanzeige dargestellt werden können. Der auf diese Weise ermittelte Wert wird auf einen durch zehn ohne Rest teilbaren Wert aufgerundet, damit eine Skalenbeschriftung mit glatten Werten erfolgen kann, die einem Benutzer die Ablesbarkeit erleichtert. Es ist dabei auch möglich, eine Aufrundung auf einen glatt durch fünf teilbaren Wert vorzunehmen. Die ist insbesondere dann von Interesse, wenn nur eine Anzeige kleiner Beträge erfolgt bzw. wenn eine Anzeige der Geschwindigkeit in Meilen pro Stunde erfolgt. Vorzugsweise wird als ein erster Prozentsatz ein Wert von 40 % vorgesehen. Als ein zweiter Prozentsatz kann eine Obergrenze für den maximalen Skalenwert, vorzugsweise die doppelte, zulässige Geschwindigkeit vorgesehen sein. Zur Vereinfachung kann jedoch auch ein additiver Zuschlag zu einer zulässigen Höchstgeschwindigkeit mit einer anschließenden Aufrundung vorgesehen sein. Für zulässige Höchstgeschwindigkeiten unter 30 km/h sind dies zum Beispiel 20 km/h, für zulässige Höchstgeschwindigkeiten von 30 km/h bis unter 50 km/h sind dies 30 km/h, für zulässige Höchstgeschwindigkeiten zwischen 50 km/h bis weniger als 80 km/h sind dies 40 km/h, für zulässige Höchstgeschwindigkeiten zwischen 80 km/h bis unter 100 km/h sind dies 40 km/h und bei Höchstgeschwindigkeiten über 100 km/h sind dies 50 km/h.

In einem an den Berechnungsschritt 12 anschließenden Entscheidungsschritt 13 wird geprüft, ob sich durch den Berechnungsschritt 12 ein neuer, maximaler Skalenwert der Geschwindigkeitsanzeige ergeben hat. Ist dies der Fall, so wird zu einem Darstellungsschritt 14 verzweigt.

In dem Darstellungsschritt 14 wird in der Anzeige des frei programmierbaren Kombiinstruments die Geschwindigkeitsskala an den neuen maximalen Skalenwert angepaßt. Erfordert die aktuelle Fahrsituation von einem Fahrer des Fahrzeugs eine erhöhte Aufmerksamkeit wie z.B. eine besondere Beachtung der Geschwindigkeitsanzeige, so wird in dem Darstellungsschritt 14 die Geschwindigkeitsskala vergrößert und/oder in einer Warnfarbe dargestellt, zum Beispiel rot, orange oder gelb. Dies kann zum Beispiel der Fall sein, wenn die Nebelschlußleuchte aktiviert wird oder wenn sich die in einem Bereich variabel vorgegebene Geschwindigkeitsbeschränkung ändert. In einem anschließenden Warnschritt 15 erfolgt vorzugsweise eine akustische Warnung des Fahrers, so daß der Fahrer nicht durch eine plötzlich geänderte Anzeige der Geschwindigkeit irritiert wird. Danach wird zu dem Datenerfassungsschritt 11 zurückverzweigt. Der Datenerfassungsschritt 11 wird von dem Entscheidungsschritt 13 aus auch direkt erreicht, falls in dem Entscheidungsschritt 13 festgestellt wird, daß keine Änderung der Geschwindigkeitsanzeige erforderlich ist. Das erfindungsgemäße Verfahren läuft ab, solange das Fahrzeug in Betrieb ist. Mit Abschalten des Fahrzeugmotors wird das Verfahren an einer beliebigen Stelle abgebrochen und beginnt bei einem neuen Start des Fahrzeugs wieder mit dem Initialisierungsschritt 10.

In der Figur 2a ist eine erste Anzeige 20 eines frei programmierbaren Kombiinstrumentes dargestellt, wie es nach dem Stand der Technik bereits bekannt ist. In der ersten Anzeige 20, die in einer Anzeigeeinheit des frei programmierbaren Kombiinstrumentes erfolgt, ist eine erste Geschwindigkeitsanzeige 21 und ein erster Drehzahlmesser 22 als ein Rundinstrument dargestellt. Ferner ist ein Tageskilometerzähler 23 und ein Kilometerzähler 24 vorhanden. Ferner ist in der ersten Anzeige 20 eine Tankanzeige 25 und eine Kühlmitteltemperaturanzeige 26 vorhanden.

In der Figur 2b ist eine nach dem erfindungsgemäßen Verfahren geänderte zweite Anzeige 200 des frei programmierbaren Kombiinstrumentes dargestellt. Hier und im folgenden bezeichnen gleiche Bezugszeichen auch gleiche Elemente. Eine zweite Geschwindigkeitsanzeige 210 ist gegenüber der ersten Geschwindigkeitsanzeige 21 vergrößert dargestellt. Ein zweiter Drehzahlmesser 220 ist gegenüber dem ersten Drehzahlmesser 22 verkleinert dargestellt. Vorzugsweise ist dabei die zweite Geschwindigkeitsanzeige 210 in einer Warnfarbe dargestellt. Die zweite Geschwindigkeitsanzeige 210 ist nun zentral in der zweiten Anzeige 200 und damit für den Fahrer besonders gut sichtbar dargestellt ist. Sowohl der Tageskilometerzähler 23, als auch der Kilometerzähler 24 sind nicht mehr in einem zentralen Blickfeld der zweiten Anzeige 200 dargestellt. Eine Änderung der zweiten Geschwindigkeitsskala 210 bzw. des Maximalwertes der zweiten Geschwindigkeitsanzeige 210 gegenüber der ersten Geschwindigkeitsanzeige 21 ist in der Figur 2b nicht dargestellt und wird in den folgenden Figuren 3 bis 6 erläutert.

In der Figur 3 ist als Ausschnitt aus der Anzeige eines frei programmierbaren Kombiinstrumentes eine Geschwindigkeitsanzeige dargestellt. Diese kann sowohl als die erste Geschwindigkeitsanzeige 21 oder auch als die zweite Geschwindigkeitsanzeige 210 aus der Figur 2a bzw. 2b ausgeführt sein. In der Anzeige ist ein Zeiger 33 dargestellt, der sich über einer ersten Skala 30 bewegt. Dabei ist der Zeiger 33 in einem bevorzugten Ausführungsbeispiel nicht als ein mechanisches Bauteil ausgeführt, sondern der Zeiger 33 wird in der ersten bzw. zweiten Geschwindigkeitsanzeige 21, 210 grafisch dargestellt.

Aus der FR 2 729 345 A1 ist eine Anzeigevorrichtung für Fahrzeuge bekannt, bei der neben einer Flüssigkristallanzeige ein mechanischer Zeiger angeordnet ist, um eine Geschwindigkeit auf verschiedenen Skalen in der Flüssigkristallanzeige anzuzeigen. Die gewählte Skala kann z.B. davon abhängen, ob sich das Fahrzeug innerhalb der Stadt oder auf der Landstraße bewegt. In einer weiteren Ausführungsform kann eine Geschwindigkeit als Zahlenwert in der Anzeige dargestellt werden.

Aus der DE 196 15 249 A1 ist eine Geschwindigkeitsanzeige für ein Kraftfahrzeug bekannt, welche die Differenz zwischen einem Istwert und einem Sollwert der Geschwindigkeit anzeigt. Der Sollwert entspricht beispielsweise einer vorgeschriebenen Höchstgeschwindigkeit des Kraftfahrzeugs und wird drahtlos zu dem Kraftfahrzeug übertragen. Weiterhin ist ein Signalgeber vorgesehen, welcher bei einer Überschreitung der Geschwindigkeit ein optisches oder akustisches Signal erzeugt.

Die erste Skala 30 verfügt über Skalenstriche 31, wobei die Skalenstriche 31 mit einer Beschriftung 32 versehen sind. Aus Gründen der Übersichtlichkeit der Zeichnung ist für die Beschriftung mit einem Bezugszeichen lediglich ein Skalenstrich sowie eine Beschriftung ausgewählt. Als eine besondere Beschriftung ist der maximale Skalenwert 320 hervorgehoben. Die Anzeige einer Meßwertes, also einer aktuellen Geschwindigkeit des Fahrzeuges, erfolgt durch eine geeignete Positionierung des Zeigers 33 über der ersten Skala 30, so daß einer Position des Zeigers eindeutig ein Geschwindigkeitswert zuordbar ist.

In der Figur 4 ist eine zweite Skala 34 mit einem zweiten maximalen Skalenwert 350 von 100 km/h dargestellt. Während in der Figur 3 keine Beschränkung der zulässigen Höchstgeschwindigkeit des Fahrzeugs vorliegt, z.B. während einer Fahrt auf einer deutschen Autobahn, liegt nun bei der Darstellung in der Figur 4 eine zulässige Höchstgeschwindigkeit von 50 km/h vor, zum Beispiel bei einer Fahrt innerorts oder bei angelegten Schneeketten. Durch die größere Spreizung der Geschwindigkeitsanzeige ist die aktuelle Fahrzeuggeschwindigkeit somit für den Betrachter besser ablesbar. Außerdem ist die Höchstgeschwindigkeit zentral in der Mitte und in einem oberen Bereich der zweiten Skala 34 angeordnet, so daß für einen Betrachter gerade der Bereich der zulässigen Höchstgeschwindigkeit besonders gut sichtbar ist.

In der Figur 5 ist eine dritte Skala 36 dargestellt, die über einen dritten maximalen Skalenwert 370 von 60 km/h verfügt. Die zulässige Geschwindigkeit beträgt hier 30 km/h, zum Beispiel in einer sogenannten Tempo-30-Zone.

In der Figur 6 ist neben der dritten Skala 36 ein Warnsymbol 39 dargestellt, das den Fahrer allgemein auf eine mögliche Gefahr, zum Beispiel drohende Glatteisbildung, hinweist. In der Zeichnung nicht dargestellt sind hier andere, situationsbezogene Warnsymbole, zum Beispiel eine Schneeflocke bei drohender Glatteisgefahr, eine Ölkanne bei zu niedrigem Öldruck bzw. ein Kühlwassersymbol bei zu heißem Kühlwasser. Ein verkürzter Zeiger 38 dient der Anzeige der aktuellen Geschwindigkeit. Infolge der Verkürzung wird das Warnsymbol 39 nicht überdeckt.

In den Figuren 7a bis 7e ist eine Geschwindigkeitsanzeige nach dem erfindungsgemäßen Verfahren in einer linearen Balkenanzeige 80 dargestellt. In einem anderen, nicht in der Zeichnung dargestellten Ausführungsbeispiel ist auch eine nicht linear verlaufende Ausführung der Balkenanzeige möglich, z.B. eine kreisbogenförmige Anordnung der Balkenanzeige. In der Figur 7a ist die Balkenanzeige 80 mit einem Anzeigebalken 81, einem ersten Hintergrund 82 und einer ersten Skalenbeschriftung 83 mit Geschwindigkeitswerten dargestellt. Aus Gründen der Übersichtlichkeit der Zeichnungen beschränkt sich hier und im folgenden die Skalenbeschriftung auf zwei Skalenwerte. Bei einer Ausführung können auch mehr Skalenwerte angegeben sein. Vor dem ersten Hintergrund 82 wird der Anzeigebalken 81 in der Balkenanzeige 80 angeordnet. Der Geschwindigkeitsbalken beginnt am linken Rand der Anzeige und deckt nur Bereiche in einem unteren Teil der Balkenanzeige 80 ab. Die Position eines rechten Randes 90 des Anzeigebalkens 81 bezeichnet die aktuelle Fahrzeuggeschwindigkeit, so daß für einen Betrachter die aktuelle Fahrzeuggeschwindigkeit aus der Position des rechten Randes 90 und einer Skalenbeschriftung entnehmbar ist. In der Figur 7a ist die erste Skalenbeschriftung 83 mit einem Geschwindigkeitswert von 100 km/h und 220 km/h gewählt. Der erste Hintergrund 82 ist dabei zum Beispiel grün dargestellt. Es ist nicht erforderlich, daß von dem ersten Hintergrund 82 eine Warnwirkung ausgeht. Der Anzeigebalken 81 hebt sich dabei vorzugsweise farblich deutlich von dem ersten Hintergrund 82 ab. Der Anzeigebalken 81 ist daher zum Beispiel blau ausgeführt.

In der Figur 7b ist von der Balkenanzeige 80 ein Bereich abgetrennt, der mit einem zweiten Hintergrund 84 ausgefüllt ist. Gegenüber der Figur 7a liegt eine zweite Skalenbeschriftung 86 mit Geschwindigkeitswerten von 50 km/h und 80 km/h vor. Der zweite Hintergrund wird vorzugsweise in einer Warnfarbe, zum Beispiel rot, ausgeführt. Durch diese Warnfarbe wird symbolisiert, daß eine in dem mit dem zweiten Hintergrund hinterlegten Bereich liegende Geschwindigkeit nicht mehr zulässig ist. Der erste Hintergrund 82 liegt in der Balkenanzeige links von dem zweiten Hintergrund 84. Der Übergang von dem ersten Hintergrund 82 auf den zweiten Hintergrund 84 bezeichnet die nunmehr zulässige Höchstgeschwindigkeit. In der Figur 7c ist eine dritte Skalenbeschriftung 87 mit 25 km/h und 50 km/h gewählt. Der Anzeigebalken 81 erreicht mit seinem rechten Rand 90 den Übergang zwischen dem ersten Hintergrund 82 und dem zweiten Hintergrund 84. Dies bedeutet, daß das Fahrzeug gerade mit 50 km/h, also mit der zulässigen Höchstgeschwindigkeit fährt. In der Figur 7d ist eine vierte Skalenbeschriftung 88 von 15 km/h und 30 km/h gewählt. In der Figur 7e ist eine fünfte Skalenbeschriftung von 2 km/h und 5 km/h gewählt. Diese Anzeige ist zum Beispiel für Spielstraßen, bei denen Schrittgeschwindigkeit als zulässige Höchstgeschwindigkeit vorgesehen ist, möglich. Von der ersten Skalenbeschriftung 83 bis zu der fünften Skalenbeschriftung 89 nimmt jeweils mit absinkenden Werten der maximal angezeigten Geschwindigkeit die Größe der angezeigten Skalenbeschriftungen zu.

In der Figur 8 ist eine Vorrichtung zur Durchführung des erfindungsgemäßen Verfahrens dargestellt. Eine Recheneinheit 50 ist mit einer Anzeigeeinheit 51 verbunden. Die Recheneinheit 50 erhält Informationen von einer Navigationseinrichtung 57, einer Kamera 58, einer Antenne 59 mit Empfangseinheit und von verschiedenen Fahrzeugsensoren. Möglich sind zum Beispiel ein Außentemperatursensor 52, ein Kühlwassertemperatursensor 53, ein Öldrucksensor 54, ein Generatorsensor 55 und ein Anhängerkupplungskontakt 56. Weiterhin ist die Recheneinheit 50 mit einem Lautsprecher 60 verbunden. Für die Ermittlung der Geschwindigkeit des Fahrzeugs ist die Recheneinheit 50 mit einem Drehzahlsensor 70 verbunden. Ferner ist die Recheneinheit mit einer manuellen Eingabeeinheit 72 verbunden. Mit einem Einschalthebel einer Nebelschlußleuchte ist eine Nebelschlußleuchtensensor 71 verbunden.

Die Recheneinheit 50 ermittelt aus den verschiedenen, ihr zur Verfügung stehenden Quellen jeweils eine zulässige Höchstgeschwindigkeit und wählt aus den ermittelten Höchtsgeschwindigkeiten ein Minimum als zulässige Höchstgeschwindigkeit aus. Aus der Navigationseinrichtung 57 wird ermittelt, auf welcher Straßenklasse sich das Fahrzeug momentan befindet und welche Höchstgeschwindigkeit für diese Straßenklasse gilt. Dies ist dadurch möglich, daß die Navigationseinrichtung 57 mit einer Satellitenortung, z.B. mit Hilfe des Global Positioning Systems (GPS), eine Ortung durchführt, dem so ermittelten Aufenthaltsort des Fahrzuegs eine Position in einer digitalen Karte zuweist und aus der Position in der digitalen Karte eine Straßenklasse ermittelt. Zu dieser Straßenklasse ist in der Recheneinheit 50 oder in der Navigationseinrichtung 57 gespeichert, welche zulässige Höchstgeschwindigkeit für sie gilt. Die digitale Karte ist vorzugsweise auf einem in der Figur 8 nicht dargestellten Speichermedium dargestellt, auf das die Navigationseinrichtung 57 zugreifen kann. Die für eine Straßenklasse zulässige Höchstgeschwindigkeit kann dabei für verschiedene Länder unterschiedlich sein, wobei das Land ebenfalls von der Navigationseinrichtung 57 ermittelbar ist. Die zulässige Höchstgeschwindigkeit wird dann von der Recheneinheit 50 errechnet. Die Kamera 58 erfaßt Verkehrszeichen am Straßenrand und wertet diese aus. Ist ein Verkehrszeichen dabei, das die zulässige Höchstgeschwindigkeit begrenzt, so wird diese zulässige Höchstgeschwindigkeit ebenfalls an die Recheneinheit 50 übermittelt. Über die Antenne 59 und die mit der Antenne 59 verbundene, nicht eingezeichnete Empfangseinheit kann der Kontakt zu einer in der Figur nicht dargestellten Dienstezentrale oder zu ebenfalls in der Figur nicht dargestellten Funkbaken hergestellt werden. Insbesondere sind über Funkbaken lokale Geschwindigkeitsbeschränkungen, z.B. an besonderen Gefahrenpunkten, über eine Funkverbindung und die Antenne 59 der Recheneinheit 50 mitteilbar. Eine Funkbake ist dabei z.B. eine Sendereinheit, deren Signale nur in einer begrenzten Reichweite in der Nähe eines Gefahrenpunktes empfangbar sind. Eine Dienstezantrale kann über eine Funkverbindung und die Antenne 59 der Recheneinheit 50 insbesondere temporäre Geschwindigkeitsbeschränkungen mitteilen, wie zum Beispiel Geschwindigkeitsbeschränkungen bei Smog oder zu hoher Ozonkonzentration in der Luft. Funkbaken und Dienstezantrale sind in der Figur 8 nicht dargestellt. Der Außentemperatursensor 52 kann eine Warnung an die Recheneinheit 50 ausgeben, wenn sich die Außentemperatur nahe dem Gefrierpunkt befindet. Die Recheneinheit 50 kann demzufolge eine Warnung an den Fahrer ausgeben und die zulässige Höchstgeschwindigkeit begrenzen. Meldet der Kühlwassertemperatursensor 53 oder der Öldrucksensor 54 eine zu hohe Kühlwassertemperatur beziehungsweise einen zu geringen Öldruck, wird zum Beispiel eine Höchstgeschwindigkeit von 60 km/h festgelegt, damit Schäden an einem Motor des Fahrzeugs möglichst vermieden werden. Meldet der Generatorsensor einen Fehler der Lichtmaschine, so kann die Recheneinheit 50 ebenfalls den Fahrer warnen und die Anzeige der Fahrzeuggeschwindigkeit an die zulässige Höchstgeschwindigkeit anpassen. Wird über den Anhängerkupplungskontakt 56 festgestellt, daß ein Anhänger vorhanden ist, wird die Anzeige der Fahrzeuggeschwindigkeit an die zulässige Höchstgeschwindigkeit für ein Fahrzeug mit Anhänger angepaßt. Mit dem Nebelschlußleuchtensensor 71 wird erfaßt, ob der Fahrer die Nebelschlußleuchte eingeschaltet hat. Da dies nur bei einer Sichtweite von unter 50 m erfolgen darf, wird ein die Anzeige der Fahrzeuggeschwindigkeit an eine zulässige Höchstgeschwindigkeit von 50 km/h angepaßt. Der Nebelschlußleuchtensensor kann hierzu auch mit einem in der Figur nicht dargestellten Sichtweitensensor kombiniert werden, der die Sichtweite in der das Fahrzeug umgebenden Luft z.B. über eine Absorptionsmessung erfaßt. Die aktuelle Fahrzeuggeschwindigkeit wird über einen hierfür vorgesehen Sensor, z.B. einen Drehzahlsensor 70 ermittelt, der z.B. im Bereich der Vorderachse angeordnet ist und die Umdrehungen der Vorderräder erfassen kann. Über die vorzugsweise mit Tasten versehene Eingabeeinheit 72 ist eine gewünschte Höchstgeschwindigkeit, die niedriger als die maximale Geschwindigkeit des Fahrzeugs ist, eingebbar, und damit ist der Anzeigebereich der Geschwindigkeit durch den Fahrer veränderbar. Hierdurch werden Beschränkungen der Höchstgeschwindigkeit erfaßt und erfindungsgemäß angezeigt, die elektronisch nur aufwendig erfaßt werden könnten, z.B. Einschränkungen aufgrund von Schneeketten, die an den Rädern des Fahrzeugs befestigt sind, oder von Matsch- und Schneereifen, deren Verwendung im allgemeinen nicht mehr die bauartbedingte Höchstgeschwindigkeit des Fahrzeugs zuläßt.

Die dargestellten Einrichtungen zur Datenerfassung stellen eine mögliche Auswahl aus verschiedenen Datenquellen dar. Weitere, mögliche Datenquellen können ebenfalls an die Recheneinheit 50 angeschlossen werden. Andererseits können bereits im Fahrzeug vorhandene Datenquellen, z.B. Sensoren, verwendet werden, um die Kosten für die Vorrichtung zu minimieren.

Die Recheneinheit 50 verfügt zumindest über einen in der Figur 8 nicht dargestellten Mikroprozessor und einen Speicher. Die Recheneinheit 50 berechnet das in der Anzeigeeinheit darzustellende Bild des frei programmierbaren Kombiinstruments. Andere, hierzu erforderliche Sensoren und Datenverbindungen zum Beispiel zu einem Mobiltelefon oder zu weiteren, für die Geschwindigkeit und die Fahrsicherheit unwichtigen Fahrzeugparametern sind in der Figur 8 ebenfalls nicht dargestellt. Eine Warnung des Fahrers erfolgt über einen Lautsprecher 60, wenn sich die Geschwindigkeitsanzeige in ihrer Darstellung durch die Anzeigeeinheit 51 geändert hat. Die Anzeigeeinheit 51 ist dabei vorzugsweise als eine Flüssigkristallanzeige oder ein Head-up-Display ausgeführt. Auch kann bei einer Überschreitung der zulässigen Höchstgeschwindigkeit um ein vorbestimmtes Maß eine akustische Warnung des Fahrers erfolgen.

In den Figuren 9a und 9b ist eine Kühlwassertemperaturanzeige dargestellt, deren Anzeige nach dem erfindungsgemäßen Verfahren erfolgt. In der Figur 9a ist in einer Balkenanzeige 110 eine Kühlwassertemperatur durch einen Anzeigebalken 111 dargestellt. Die Balkenanzeige 110 verfügt über eine Skalenbeschriftung 112, die von einem minimalen Wert an einem linken Rand 116 der Balkenanzeige 110 bis zu einem rechten Rand 117 der Balkenanzeige 110 ansteigt. In der Figur 9a repräsentiert der linke Rand 116 eine Temperatur von Null Grad Celcius und der rechte Rand 117 eine Temperatur von 140 Grad Celcius. Ein rechter Rand 115 des Anzeigebalkens 111 repräsentiert dabei die momentane Temperatur des Kühlwassers. Der Anzeigebalken 111 dehnt sich von dem linken Rand 116 bis zu dem rechten Rand 115 des Anzeigebalkens aus. Dabei läuft der Anzeigebalken 111 nur in einem unteren Teil der Balkenanzeige 110. Ein oberer Teil der Balkenanzeige bleibt vorteilhafterweise frei, so daß ein Hintergrund sichtbar ist. In einem ersten Bereich 113, der von einer Temperatur von Null Grad Celcius bis zu einer Temperatur von 100 Grad Celcius verläuft, wird ein erster Hintergrund gewählt. Dieser Hintergrund ist vorzugsweise eine Farbe, der im allgemeinen keine Warnfunktion zugewiesen wird, zum Beispiel grün. In einem zweiten Bereich 114 wird als Hintergrund eine Farbe verwendet, der im allgemeinen eine Warnfunktion zugewiesen wird, zum Beispiel rot. Die Anzeige in der Figur 9a ist vorzugsweise für einen Betrieb vorgesehen, bei dem eine geringe oder höchstens eine normale Kühlwassertemperatur vorliegt.

In der Figur 9b verläuft der Anzeigebalken 111 zwischen einem linken Rand 122 der Balkenanzeige 110 und einem rechten Rand 123 der Balkenanzeige 110. Dem linken Rand 122 ist ein Temperaturwert von 80 Grad Celcius zugewiesen. Dem rechten Rand 123 ist wie bei dem rechten Rand 117 ein Temperaturwert von 140 Grad Celcius zugewiesen. Eine Skalenbeschriftung 118 weist nun folglich einen Temperaturbereich von 80 Grad Celcius bis 140 Grad Celcius auf. Die Anzeige muß dabei nicht notwendigerweise linear sein. In einem ersten Bereich 119 wird ein Temperaturbereich von 20 Grad Celcius überstrichen. Der erste Bereich 119 ist mit der gleichen Farbe hinterlegt, wie der erste Bereich 113 in der Figur 9a. In einem zweiten Bereich 121 wird bei der gleichen Erstreckung des Anzeigebalkens 111 wie in dem ersten Bereich 119 nur eine Temperaturdifferenz von 5 Grad Celcius übertrichen, so daß eine Anzeige mit einer höheren Ablesegenauigkeit erreicht wird. Der zweite Bereich 121 ist vorzugsweise mit der gleichen Farbe hinterlegt, wie der zweite Bereich 114 in der Figur 9a. Durch den rechten Rand 115 des Anzeigebalkens 111 folgt auch bei der Darstellung in der Figur 9b die Zuordnung zu einem Meßwert der Temperatur des Kühlwassers.

In den Figuren 10a bis 10d ist eine Tankanzeige nach dem erfindungsgemäßen Verfahren dargestellt. In der Figur 10a ist eine Balkenanzeige 130 für den Tankfüllstand dargestellt. Ein Anzeigebalken 131 beginnt an einem linken Rand 134 der Balkenanzeige 130 und verläuft bis zu einem rechten Rand 138 des Anzeigebalkens 131. Der rechte Rand 138 des Anzeigebalkens 131 symbolisiert den Füllstand des Tanks. Der Anzeigebalken 131 verläuft vor einem Hintergrund 132. Der Füllstand des Tankes ist in der Figur 10a durch ein erstes Symbol 133, das einen leeren Tank symbolisiert, durch ein zweites Symbol 135, das einen halb vollen Tank symbolisiert und ein drittes Symbol 136, das einen vollen Tank symbolisiert, dargestellt. Das erste Symbol 133 ist an dem linken Rand 134 der Balkenanzeige 130 angeordnet. Das dritte Symbol 136 ist an einem rechten Rand 137 der Balkenanzeige 130 angeordnet. Das zweite Symbol 135 befindet sich in der Mitte zwischen dem ersten Symbol 133 und dem dritten Symbol 136. In der Figur 10a befindet sich der rechte Rand 138 des Anzeigebalkens 131 zwischen dem zweiten Symbol und dem dritten Symbol 136. Der Tank ist damit noch zu mehr als der Hälfte gefüllt. Der Hintergrund 132 ist daher in einer Farbe ausgefüllt, die keine Warnfarbe ist, zum Beispiel grün.

In der Figur 10b ist eine alternative Darstellungsweise der Figur 10a ausgeführt. Die Symbole sind durch eine erste Beschriftung 149 von "351" und eine zweite Beschriftung 139 von "701" ersetzt. Die erste und die zweite Beschriftung 149, 139 befinden sich über der Balkenanzeige 130. Die zweite Beschriftung 139 bezeichnet dabei den vollen Tank, die erste Beschriftung 149 den halbvollen Tank.

In der Figur 10c ist eine Tankanzeige für den Fall ausgeführt, daß der Tankfüllstand ungefähr 35 Liter beträgt, der Tank also in etwa halb voll ist. Dem rechten Rand 137 der Balkenanzeige ist nun eine dritte Beschriftung 143 von "40L" zugeordnet. Dies bedeutet, daß von der Figur 10b beim Übergang zu der Figur 10c der maximale Skalenwert der Tankanzeige von 70 Liter auf 40 Liter reduziert wurde. In der Mitte der Balkenanzeige 130 ist in der Figur 10c eine vierte Beschriftung 142 von "201" vorgesehen, die einen Tank mit einer Füllung von 20 Litern symbolisiert. Der rechte Rand 138 des Anzeigebalkens 131 befindet sich zwischen der dritten Beschriftung 143 und der vierten Beschriftung 142, woraus ersichtlich ist, daß der Tank zwischen 20 Liter und 40 Liter Treibstoff beinhalten muß. Die Balkenanzeige 130 ist in einen ersten Bereich 140 und einen zweiten Bereich 141 unterteilt. Der erste Bereich 140 geht von dem linken Rand 134 der Balkenanzeige 130 aus. Der zweite Bereich 141 schließt an den ersten Bereich 140 rechts an und endet an dem rechten Rand 137. Der erste Bereich 140 ist mit einem Hintergrund in einer Warnfarbe hinterlegt. Der zweite Bereich ist nicht notwendigerweise in einer Warnfarbe hinterlegt, sondern ist z.B. grün ausgeführt. Die Farben des Hintergrundes des ersten und des zweiten Bereiches 140 und 141 unterscheiden sich. Der erste Bereich 140 symbolisiert den Reservebereich des Tankes. Wenn der Tankfüllstand in diesen Reservebereich abgesunken ist, so ist ein Handeln des Fahrers erforderlich: Der Fahrer sollte entweder aus einem Reservekanister Treibstoff nachfüllen oder so bald wie möglich eine Tankstelle aufsuchen, damit das Fahrzeug nicht ohne Treibstoff liegen bleibt. In der Figur 10d ist die Balkenanzeige 130 mit einer fünften Beschriftung 147 an dem rechten Rand 137 und einer sechsten Beschriftung 146 von "51" in der Mitte über der Balkenanzeige 130 versehen. Der maximale Skalenwert beträgt nun 10 Liter, wie aus der fünften Bezeichnung 147 deutlich wird. Der erste Bereich 140 aus der Figur 10c ist in der Figur 10d auf einen in einer Warnfarbe ausgeführten Reservebereich 145, der sich bis zu der Mitte der Balkenanzeige 130 erstreckt, ausgedehnt. An den Reservebereich 145, der an dem linken Rand 134 der Balkenanzeige beginnt, schließt sich ein übriger Bereich 148 bis zu dem rechten Rand 137 der Balkenanzeige an, der nicht in einer Warnfarbe ausgeführt ist.

Von der Figur 10b über die Figur 10c bis zu der Figur 10d ist mit absinkendem Maximalwert der Balkenanzeige 130 die Schrift größer, in der eine Beschriftung der Balkenanzeige 130 angegeben wird.

Die Ausführungsbeispiele sind für frei programmierbare Kombiinstrumente beschrieben, sind jedoch auf beliebige Kombiinstrumente in Kraftfahrzeugen übertragbar, bei denen zumindest die Anzeige eines Meßwertes in einem Bildschirm erfolgt und dabei frei gestaltet werden kann. Übrige Meßwerte, die nicht in der frei programmierbaren Anzeige dargestellt werden, können in unveränderbaren Anzeigen, z.B. Zeigerinstrumenten, dargestellt werden.

## Patentansprüche

1. Verfahren zur Anzeige eines Messwertes in einem frei programmierbaren Kombiinstrument in einem Fahrzeug, wobei das Kombiinstrument von einer Recheneinheit (50) gesteuert wird, wobei über Sensoren Fahr- und Betriebsdaten des Fahrzeugs ermittelt werden, wobei in einem ersten Verfahrensschritt ein maximaler Skalenwert (320, 350, 370) einer Skala in Abhängigkeit von mindestens einem weiteren Wert, vorzugsweise einem gespeicherten Wert oder einem ermittelten Wert der Fahr- und Betriebsdaten, für eine Messgröße bestimmt wird und wobei in einem zweiten Verfahrensschritt der Messwert der Messgröße auf der Skala (30, 34, 36) für die Messgröße angezeigt wird, **dadurch gekennzeichnet, dass** bei Fahr- und Betriebsdaten, bei denen eine besondere Aufmerksamkeit und/oder ein Handeln des Fahrers gefordert wird, die Skala in einer Warnfarbe angezeigt wird und/oder die Skala vergrößert angezeigt wird.

2. Verfahren nach Anspruch 1, **dadurch gekennzeichnet, dass** neben dem maximalen Skalenwert ein minimaler Skalenwert bestimmt wird.

3. Verfahren nach einem der vorhergehenden Ansprüche, **dadurch gekennzeichnet, dass** der maximale Skalenwert so gewählt wird, dass ein maximal erlaubter Messwert durch den maximalen Skalenwert um mindestens einen ersten Prozentwert und höchstens um einen zweiten Prozentwert überschritten wird, wobei der zweite Prozentwert größer als der erste Prozentwert gewählt wird.

4. Verfahren nach einem der vorhergehenden Ansprüche **dadurch gekennzeichnet, dass** als Betriebsparameter des Fahrzeugs zumindest der Öldruck, die Kühlwassertemperatur, die Generatorfunktion und die Außentemperatur erfasst wird.

5. Verfahren nach einem der vorhergehenden Ansprüche, **dadurch gekennzeichnet, dass** als Messgröße die Fahrzeuggeschwindigkeit gewählt wird.

6. Verfahren nach Anspruch 5, **dadurch gekennzeichnet, dass** über eine Navigationseinrichtung (57) eine Position des Fahrzeugs ermittelt wird und aus der Position des Fahrzeugs eine Straßenklasse bestimmt wird, auf der das Fahrzeug bewegt wird, und dass eine maximal erlaubte Geschwindigkeit in Abhängigkeit von der Straßenklasse bestimmt wird.

7. Verfahren nach einem der Ansprüche 5-6, **dadurch gekennzeichnet, dass** über eine Kamera (58) Verkehrszeichen erfasst werden und dass eine maximal erlaubte Geschwindigkeit in Abhängigkeit von einer auf dem Verkehrszeichen angegebenen Höchstgeschwindigkeit bestimmt wird.

8. Verfahren nach einem der Ansprüche 5-7, **dadurch gekennzeichnet, dass** eine maximal erlaubte Geschwindigkeit dem Fahrzeug über eine Funkverbindung mitgeteilt wird.

9. Verfahren nach einem der Ansprüche 5-8, **dadurch gekennzeichnet, dass** eine maximal erlaubte Geschwindigkeit des Fahrzeugs über eine Eingabeeinheit (72) manuell eingegeben wird.

10. Verfahren nach einem der vorherigen Ansprüche, **dadurch gekennzeichnet, dass** der Messwert der Messgröße auf der Skala (30, 34, 36) für die Messgröße mit einem in der Anzeige dargestellten Zeiger (33) oder mit einem in einer beschrifteten Balkenanzeige dargestellten Anzeigebalken (80, 110, 130) angezeigt wird

11. Vorrichtung zur Durchführung des Verfahrens nach einem der vorherigen Ansprüche, wobei ein in einem Fahrzeug angeordnetes frei programmierbares Kombiinstrument mit einer Recheneinheit (50) verbunden ist, wobei das Kombiinstrument von der Recheneinheit (50) gesteuert wird, wobei die Recheneinheit wiederum mit Sensoren (52, 53, 54, 55, 56, 70, 71) im Fahrzeug verbunden ist, durch die Fahr- und Betriebsdaten des Fahrzeugs ermittelbar sind, wobei ein maximaler Skalenwert (320, 350, 370) einer Skala in Abhängigkeit von mindestens einem weiteren Wert, vorzugsweise einem gespeicherten Wert oder einem ermittelten Wert der Fahr- und Betriebsdaten, für eine Messgröße bestimmt wird, wobei in einem zweiten Verfahrensschritt der Messwert der Messgröße auf der Skala (30, 34, 36) für die Messgröße angezeigt wird, **dadurch gekennzeichnet, dass** bei Fahr- und Betriebsdaten, bei denen eine besondere Aufmerksamkeit und/oder ein Handeln des Fahrers gefördert wird, die Skala in einer Warnfarbe angezeigt wird und/oder die Skala vergrößert angezeigt wird

12. Vorrichtung nach Anspruch 11, **dadurch gekennzeichnet, dass** die Recheneinheit (50) zumindest zeitweise über eine Funkverbindung mit einer Dienstezentrale verbunden ist, dass eine maximal erlaubte Geschwindigkeit des Fahrzeugs von der Dienstezentrale abrufbar ist und dass aus dieser maximal erlaubten Geschwindigkeit und den Fahr- und Betriebsdaten des Fahrzeugs ein maximaler Skalenwert der Geschwindigkeitsanzeige ennittelbar ist.

13. Vorrichtung nach Anspruch 11, **dadurch gekennzeichnet, dass** die Recheneinheit (50) mit einer Navigationseinrichtung (57) verbunden ist, durch die eine Position des Fahrzeug in einer digitalen Karte ermittelbar ist, dass eine maximal erlaubte Geschwindigkeit von der Recheneinheit aus der Position des Fahrzeugs in der digitalen Karte ermittelbar ist und dass aus den Fahr- und Betriebsdaten sowie aus der maximal erlaubten Geschwindigkeit ein maximaler Skalenwert der Geschwindigkeitsskala ermittelbar ist.

14. Vorrichtung nach einem der Ansprüche 11-13, **dadurch gekennzeichnet, dass** mit der Recheneinheit eine Kamera (58) zur Verkehrsieichenerfassung verbunden ist.

15. Vorrichtung nach einem der Ansprüche 11-14, **dadurch gekennzeichnet, dass** die Recheneinheit (50) mit einer Vorrichtung zur Audioausgabe (61) verbunden ist und dass bei Fahr- oder Betriebsdaten; die eine besondere Aufmerksamkeit und/oder ein Handeln des Fahrers erfordern eine zusätzliche akustische Warnung erfolgt.

16. Vorrichtung nach einem der Ansprüche 11-15, **dadurch gekennzeichnet, dass** eine Anzeigeeinheit (51) des Kombiinstruments als eine Flüssigkristallanzeige oder als ein Head-Up Display ausgeführt ist.

17. Vorrichtung nach einem der Ansprüche 11-16, **dadurch gekennzeichnet, dass** der Messwert der Messgröße auf der Skala (30, 34, 36) für die Messgröße mit einem in der Anzeige dargestellten Zeiger (33) oder mit einem in einer beschrifteten Balkenanzeige (80, 110, 130) dargestellten Anzeigebalken angezeigt wird.

## Claims

1. Method for displaying a measured value in a freely programmable combination instrument in a vehicle, the combination instrument being controlled by a computing unit (50), driving and operating data of the vehicle being determined by means of sensors, a maximum scale value (320, 350, 370) of a scale being determined in a first method step as a function of at least one further value, preferably a stored value or an acquired value for the driving and operating data, for a measured variable, and the measured value of the measured variable being displayed on the scale (30, 34, 36) for the measured variable in a second method step, **characterized in that** in the case of driving and operating data in which particular attentiveness and/or action is required of the driver, the scale is displayed in a warning colour and/or the scale is displayed in an enlarged form.

2. Method according to Claim 1, **characterized in that** a minimum scale value is determined in addition to the maximum scale value.

3. Method according to one of the preceding claims, **characterized in that** the maximum scale value is selected such that a maximum permitted measured value is exceeded by the maximum scale value by at least a first percentage value and at most a second percentage value, the second percentage value being selected to be larger than the first percentage value.

4. Method according to one of the preceding claims, **characterized in that** at least the oil pressure, the cooling water temperature, the generator function and the external temperature are sensed as operating parameters.

5. Method according to one of the preceding claims, **characterized in that** the velocity of the vehicle is selected as a measured variable.

6. Method according to Claim 5, **characterized in that** a position of the vehicle is acquired by means of a navigation device (57), and the class of road on which the vehicle is moving is determined from the position of the vehicle, and **in that** the maximum permitted velocity is determined as a function of the class of road.

7. Method according to one of Claims 5 - 6, **characterized in that** road signs are sensed by means of a camera (58), and **in that** a maximum permitted velocity is determined as a function of a maximum velocity which is indicated on the road sign.

8. Method according to one of Claims 5 - 7, **characterized in that** a maximum permitted velocity is communicated to the vehicle by means of a radio link.

9. Method according to one of Claims 5 - 8, **characterized in that** a maximum permitted velocity of the vehicle is input manually by means of an input unit (72).

10. Method according to one of the preceding claims, **characterized in that** the measured value of the measured variable is displayed on the scale (30, 34, 36) for the measured variable with a pointer (33) which is represented on the display or with a display bar which is represented in a labelled bar display (80, 110, 130).

11. Device for carrying out the method according to one of the preceding claims, a freely programmable combination instrument which is arranged in a vehicle being connected to a computing unit (50), the combination instrument being controlled by the computing unit (50), the computing unit being in turn connected to sensors (52, 53, 54, 55, 56, 70, 71) in the vehicle by means of which driving and operating date of the vehicle can be determined, a maximum scale value (320, 350, 370) of a scale being determined for a measured variable as a function of at least one further value, preferably a stored value or an acquired value of the driving and operating data, the measured value of the measured variable being displayed on the scale (30, 34, 36) for the measured variable in a second method step, **characterized in that** in the case of driving and operating data in which particular attentiveness and/or action is required of the driver, the scale is displayed in a warning colour and/or the scale is displayed in an enlarged form.

12. Device according to Claim 11, **characterized in that** the computing unit (50) is connected at least temporarily to a service centre by means of a radio link, **in that** a maximum permitted velocity of the vehicle can be called from the service centre, and **in that** a maximum scale value of the velocity display can be acquired from this maximum permitted velocity and the driving and operating data of the vehicle.

13. Device according to Claim 11, **characterized in that** the computing unit (50) is connected to a navigation device (57) by means of which a position of the vehicle on a digital map can be acquired, **in that** a maximum permitted velocity can be acquired by the computing unit from the position of the vehicle on the digital map, and **in that** a maximum scale value of the velocity scale can be acquired from the driving and operating data and from the maximum permitted velocity.

14. Device according to one of Claims 11 - 13, **characterized in that** a camera (58) for taking images of road signs is connected to the computing unit.

15. Device according to one of Claims 11 - 14, **characterized in that** the computing unit (50) is connected to an audio output device (61), and **in that** an additional acoustic warning is issued when there is driving or operating data which requires particular attentiveness and/or action of the driver.

16. Device according to one of Claims 11 - 15, **characterized in that** a display unit (51) of the combination instrument is embodied as a liquid crystal display or as a head-up display.

17. Device according to one of Claims 11 - 16, **characterized in that** the measured value of the measured variable is displayed on the scale (30, 34, 36) for the measured variable with a pointer (33) which is represented on the display or with a display bar which is represented in a labelled bar display (80, 110, 130).

## Revendications

1. Procédé d'affichage d'une valeur de mesure dans un instrument combiné programmable librement dans un véhicule, selon lequel
l'instrument combiné est commandé par une unité de calcul (50), des données de marche et de fonctionnement du véhicule sont détectées par des capteurs, on définit pour une grandeur de mesure dans une première étape de procédé une valeur d'échelle maximale (320, 350, 370) d'une échelle en fonction d'au moins une autre valeur, de préférence une valeur mémorisée ou déterminée des données de marche et de fonctionnement, et dans une deuxième étape de procédé la valeur de mesure de la grandeur de mesure est affichée sur l'échelle (30, 34, 36) pour la grandeur de mesure,
**caractérisé en ce qu'**
en présence de données de marche et de fonctionnement qui nécessitent une attention particulière et/ou une action du conducteur, l'échelle est affichée dans une couleur d'avertissement et/ou de manière agrandie.

2. Procédé selon la revendication 1,
**caractérisé en ce qu'**
on définit outre la valeur d'échelle maximale, une valeur d'échelle minimale.

3. Procédé selon l'une quelconque des revendications précédentes,
**caractérisé en ce que**
la valeur d'échelle maximale est choisie pour qu'une valeur de mesure maximale autorisée soit dépassée par la valeur d'échelle maximale d'au minimum une première valeur en pourcentage et d'au maximum une deuxième valeur en pourcentage, cette dernière étant choisie supérieure à la première.

4. Procédé selon l'une quelconque des revendications précédentes,
**caractérisé en ce que**
comme paramètre de fonctionnement du véhicule on détecte au moins la pression d'huile, la température d'eau de refroidissement, le fonctionnement du générateur et la température extérieure.

5. Procédé selon l'une quelconque des revendications précédentes,
**caractérisé en ce que**
comme grandeur de mesure on choisit la vitesse du véhicule.

6. Procédé selon la revendication 5,
**caractérisé en ce qu'**
on détermine une position du véhicule par un dispositif de navigation (57) et, à partir de la position du véhicule une catégorie de route sur laquelle se déplace le véhicule, et une vitesse maximale autorisée est déterminée en fonction de la catégorie de route.

7. Procédé selon l'une quelconque des revendications 5-6,
**caractérisé en ce que**
des panneaux de signalisation sont détectés par une caméra (58), et une vitesse maximale autorisée est définie en fonction d'une vitesse maximale indiquée sur le panneau de signalisation.

8. Procédé selon l'une quelconque des revendications 5 - 7,
**caractérisé en ce qu'**
une vitesse maximale autorisée est communiquée au véhicule par l'intermédiaire d'une liaison radio.

9. Procédé selon l'une quelconque des revendications 5 - 8,
**caractérisé en ce qu'**
une vitesse maximale autorisée du véhicule est entrée manuellement par l'intermédiaire d'une unité de saisie (72).

10. Procédé selon l'une quelconque des revendications précédentes,
**caractérisé en ce que**
la valeur de mesure de la grandeur de mesure est affichée sur l'échelle (30, 34, 36) pour la grandeur de mesure à l'aide d'une aiguille (33) représentée sur l'affichage, ou d'une barre d'affichage (80, 110, 130) représentée sur un affichage en barres muni de marquages.

11. Dispositif pour la mise en oeuvre du procédé selon l'une quelconque des revendications précédentes, dans lequel un instrument combiné programmable librement disposé dans un véhicule est relié à une unité de calcul (50), l'instrument combiné est commandé par l'unité de calcul (50), l'unité de calcul est reliée à son tour à des capteurs (52, 53, 54, 55, 56, 70, 71) situés dans le véhicule et permettant de déterminer des données de marche et de fonctionnement du véhicule, dans une première étape une valeur d'échelle maximale (320, 350, 370) d'une échelle est définie pour une grandeur de mesure en fonction d'au moins une autre valeur, de préférence une valeur mémorisée ou déterminée des données de marche et de fonctionnement, alors que dans une deuxième étape de procédé la valeur de mesure de la grandeur de mesure est affichée sur l'échelle (30, 34, 36) pour la grandeur de mesure,
**caractérisé en ce qu'**
en présence de données de marche et de fonctionnement qui nécessitent une attention particulière et/ou une action du conducteur, l'échelle est affichée dans une couleur d'avertissement et/ou de manière agrandie.

12. Dispositif selon la revendication 11,
**caractérisé en ce que**
l'unité de calcul (50) est reliée du moins temporairement par une liaison radio à une centrale de service, une vitesse maximale autorisée du véhicule peut être demandée par la centrale de service, et à partir de cette vitesse maximale autorisée et des données de marche et de fonctionnement du véhicule, une valeur d'échelle maximale de l'affichage de vitesse peut être déterminée.

13. Dispositif selon la revendication 11,
**caractérisé en ce que**
l'unité de calcul (50) est reliée à un dispositif de navigation (57) permettant de déterminer une position du véhicule sur une carte numérique, une vitesse maximale autorisée peut être déterminée par l'unité de calcul à partir de la position du véhicule sur la carte numérique, et à partir des données de marche et de fonctionnement ainsi que de la vitesse maximale autorisée, une valeur d'échelle maximale du cadran de vitesse peut être déterminée.

14. Dispositif selon l'une quelconque des revendications 11 - 13,
**caractérisé en ce qu'**
une caméra (58) est reliée à l'unité de calcul pour détecter des panneaux de signalisation.

15. Dispositif selon l'une quelconque des revendications 11 - 14,
**caractérisé en ce que**
l'unité de calcul (50) est reliée à un dispositif d'émission audio (61), et en présence de données de marche ou de fonctionnement nécessitant une attention particulière et/ou une action du conducteur, un avertissement acoustique supplémentaire est effectué.

16. Dispositif selon l'une quelconque des revendications 11 - 15,
**caractérisé en ce qu'**
une unité d'affichage (51) de l'instrument combiné a la forme d'un affichage à cristaux liquides ou d'un collimateur de pilotage.

17. Dispositif selon l'une quelconque des revendications 11 - 16,
**caractérisé en ce que**
la valeur de mesure de la grandeur de mesure est affichée sur l'échelle (30, 34, 36) pour la grandeur de mesure à l'aide d'une aiguille (33) représentée sur l'affichage, ou d'une barre d'affichage représentée sur un affichage en barres muni de marquages (80, 110, 130).
